# EUROPEAN PATENT SPECIFICATION

(11) **EP 2 538 771 B1**
(45) Date of publication and mention of the grant of the patent: **07.01.2015**
(21) Application number: 11705427.0
(22) Date of filing: 28.01.2011
(51) Int. Cl.: A01J 7/00, A01J 7/04, A01J 9/04

(54) **AUTOMATIC MILKING SYSTEM AND COMPONENTS THEREFOR**
AUTOMATISCHES MELKSYSTEM UND BESTANDTEILE DAFÜR
SYSTÈME DE TRAITE AUTOMATIQUE ET COMPOSANTS CORRESPONDANTS

(30) Priority: 02.02.2010 DK 201000084
(43) Date of publication of application: 02.01.2013
(73) Proprietor: Jensen, Johannes, 6660 Lintrup (DK)
(72) Inventor: Jensen, Johannes, 6660 Lintrup (DK)
(74) Representative: Skov, Anders
(86) International application number: PCT/DK2011/000003
(87) International publication number: WO 2011/095166

(56) References cited:
- WO-A1-97/16962
- DE-A1- 4 228 752
- GB-A- 1 532 222
- GB-A- 2 372 554
- US-A1- 2005 183 428

## Description

### FIELD OF THE INVENTION

The present invention relates to an automatic milking system comprising at least one milking robot assembly with a milking robot and a milk cooling apparatus. Moreover, the present invention relates to a milking cooling apparatus for use in the automatic milking system.

Document US 2005/0183428 discloses an automatic milking system comprising a milk cooling apparatus comprising a first heat exchanger for cooling milk, the first heat exchanger being fluidly connected to a water supply, by means of which the freshly milked is cooled with the first heat exchanger, a second heat exchanger which is fluidly connected to the water supply to a predetermined temperature, one or more valves, wherein the valves are adapted to control the directional flow of the cooling water, whereby the first and second heat exchangers are located in the vicinity of the milking parlour.

### BACKGROUND OF THE INVENTION

Previously cows were milked by hand, however with the industrialisation of farming, more advanced methods and systems have been introduced.

One system is designed such that one or more central milking stations are provided at which the cows are milked centrally typically twice a day. Such a system provides the advantage that the milk can be milked at a position next to the refrigerated milk storage system at which the milk is stored subsequently. Typically such systems are designed such that one or more operators - typically the farmer - operate the device.

In another system, decentral milking robots are located at different locations e.g. in a stable and/or in the field where the cows are livening during the summer. Often such systems are designed such that the individual cow itself decides when it finds that it is time to be milked. When this is the case, the cow enters the milking robot and is milked. During the milking process, the milking robot pumps the fresh milk from the milking robot to a central refrigerated milk storage system. However, depending on the distance between the milking robot and the central refrigerated milk storage system, this process may take time. This is especially the case when no other cow relatively soon thereafter decides to be milked. If the milk does not reach the central refrigerated milk storage system within a predetermined period of time, the milk in the pipe between the milking robot and the central refrigerated milk storage system will be forced into the milk tank by means of compressed air. However, such application of compressed air drastically reduces the quality of the milk, since this process will increase hydrolysis of the lipid molecules in the milk, thereby promoting milk rancidity resulting in low quality milk

It is an object of embodiments of the present invention to provide a solution by means of which the quality reducing application of compressed air may be avoided.

Moreover, it is an object of embodiments of the present invention to provide a solution in which the milk is cooled immediately after being milked while at the same time allowing for a decentral milking structure.

It is also an object of the present invention, that cooling is performed on milk from only one cow at the time, said milk being stationary in the cooling system during the cooling process, which allows for rapid and efficient cooling. While the milk from one cow is being cooled in the cooling system, the next cow in line is at the same time being milked by the milking robot.

Moreover, it is an object of the present invention to cool the tap water from the water supply, before usage for cooling.

Furthermore, it is an object of the present invention to provide an automatic milking system, comprising an advanced and sophisticated cooling system, comprising one or more valves, which are able to recycle and utilize the cooling water in a very efficient way. The one or more valves may be thermostatic valves.

Additionally, it is an object of the present invention to utilize the thermal energy retrieved from the milk.

### DESCRIPTION OF THE INVENTION

In a first aspect the present invention relates to an automatic milking system according to claim 1.

One advantage of the present invention is the utilization of the water supply for cooling the milk down to a temperature at which it is easier to maintain the quality of the milk. However, one problem with using e.g. tap water to cool milk down is that tap water will often-especially during the summer - have a temperature which makes it difficult to cool the milk fast enough and to a desired level.

Firstly, it will be appreciated that the milk cannot in a simple heat exchanger be cooled down to a temperature below the temperature of the water. Moreover, it will be appreciated that the milk is cooled down by transferring thermal energy from the milk to the water, thus the larger the temperature gradient between the milk and the water is, the easier it is to cool the milk. Accordingly, the provision of the second heat exchanger allows for a faster cooling of the milk and for cooling the milk down to the desired temperature during all periods of the year - also during the summer period.

Each milking robot assembly comprises a milking robot. Moreover, one or more of the milking robot assemblies comprises a milk cooling apparatus. The automatic milking system may comprise a booth with an entrance through which the animal enters the booth and an exit through which the animal leaves the booth. Both the entrance and the exit may comprise doors such that the animal may be retained in the booth during milking. The booth may comprise a feeding and a drinking trough by means of which the animal is feed during the milking process.

In order to be able to identify the animal, an animal identification system may be provided. The animal identification system may comprise a computer for processing and storing data and a transmitter and a receiver (e.g. provided as one unit) for communicating with an identification tag of the animal.

The milking robot may comprise one or more robot arms arranged to be able to move one or more - e.g. four - teat cups into a position at which the teat cups can used to milk the animal.

The milking robot may be used to milk any animal such as a cow, a goat or a sheep or any other milk producing animal with teats.

The automatic milking system may comprise any number of milking robot assemblies, such as one, two, three, four, five, ten, fifteen, twenty, thirty, forty, fifty, sixty, seventy, eighty, ninety, one hundred or any other number. It will be appreciated that in most cases, the number of milking robot assemblies will be considerably lower than the number of animals, as the milking robot may be used by more than one animal.

As described in the aforementioned, at least one of the milking robot assemblies comprises a milk cooling apparatus. In one embodiment, all the milking robot assemblies comprise one milk cooling apparatus and one milking robot. In an alternative embodiment, one milk cooling apparatus is provided for and shared by every two milking robots, such as every three, such as every four, such as every five, etc.

The first heat exchanger is connected to a water supply such as a tap/fresh water supply. In one embodiment this fresh water supply is fluidly connected to an apparatus for dispensing water to the animals, e.g. a water trough. In one embodiment, the water of the water supply is only used to cool the milk and not as drinking or cleaning water in connection with the milking automatic milking system.

The first heat exchanger may form an integral part of at least a part of the milking robot, e.g. such that the first heat exchanger and at least a part of the milking robot are provided in the same casing. In one embodiment, the milking robot comprises a moveable part and a stationary part, in this case the first heat exchanger and the stationary part may be provided as one unit e.g. such that they are both provided in the same casing. The stationary part may be fixed to the ground.

The first heat exchanger is fluidly connected to the water supply. In one embodiment, the first heat exchanger is designed such that it may be attached to an existing water pipe without modifying the water pipe in any way. In another embodiment, the first heat exchanger is designed such that the water pipe is coupled to an inlet and an outlet of the first heat exchanger. The first heat exchanger may be a tubular heat exchanger where a first pipe is encirculated by a second pipe. In the latter case, the first pipe may be used as a conduit for the water of the water supply and the second may be used as a conduit the freshly milked milk, or vice versa. Alternatively, or as a supplement, the first heat exchanger may comprise a plate heat exchanger and/or a spiral heat exchanger and/or any other heat exchanger design.

The second heat exchanger is fluidly connected to the water supply and is used to cool the water down prior to flowing into the first heat exchanger. The effect is that the water send into the first heat exchanger (and thus the water used to cool the milk) may be as cold as possible - also during hot periods in the summer. It will be appreciated that the second heat exchanger should cool the water as much as possible while maintaining the temperature above the freezing point of the water of the water supply. When normal tap water is used this means that the water should be as close to positive side of zero degrees Celsius as possible. This ensures that the water is cold while it is prevented that the water freezes inside the water pipe. In embodiments where the water is not used as drinking water, an anti-freezing agent may be added to the water and accordingly, the water may be cooled to a temperature below zero degrees Celsius but above the freezing point of the water containing the anti-freezing agent.

In one embodiment, the first and the second heat exchanger are integrated into one unit e.g. by being provided in the same casing. In relation to the flow direction of the water of the water supply, the water initially flows into the second heat exchanger in which the water is cooled and subsequently into the first heat exchanger in which the temperature of the water is elevated as during the cooling of the freshly milked milk.

In one embodiment, the second heat exchanger comprises an evaporator for cooling the water of the water supply. The evaporator may be adapted to accommodate a cooling medium which has a boiling point below 0 degrees Celsius. Said cooling medium may be any compound belonging to the group of compounds comprising or consisting of hydrocarbons (HCs), hydrofluorocarbons (HFCs), perfluorocarbons (PFCs), hydrochlorofluorocarbons (HCFCs) or chlorofluorocarbons (CFCs), including any kind of Freon, and carbondioxide (CO₂).

In a certain embodiment of the present invention, the cooling medium may be a compound belonging to the hydrofluorocarbons (HFC), in particular R-134a (1,1,1,2-tetrafluoroethane), as well as carbondioxide (CO₂).

In a preferred embodiment of the present invention, the cooling medium is R-134a (1,1,1,2-tetrafluoroethane).

In order to be able to utilize the thermal energy which has been retrieved from the water of the water supply by means of the second heat exchanger, the automatic milking system may comprise a heat accumulating structure comprising a water tank and a condenser. In one embodiment the heat accumulating structure comprises, another medium for storage of thermal energy such as a molten salt solution.

The condenser and the compressor may be fluidly connected to the evaporator of the second heat exchanger via a first and a second conduit.

Accordingly, the automatic milking system may define a heat exchanging system comprising
- the evaporator,
- the first conduit,
- the compressor,
- the second conduit,
- and the condenser.

Each of the evaporator and the condenser may comprise an inlet and an outlet. Accordingly the heat exchanging system may in one embodiment be configured such that the outlet of the condenser is fluidly connected to the inlet of the evaporator via the expansion valve, and such that the outlet of the evaporator is fluidly connected to the inlet of the condenser via a compressor. Thus, when the compressor is operated, the evaporator cools the water flowing through the second heat exchanger and the condenser elevates the temperature of the heat cumulating structure.

The aforementioned cooling medium may be provided inside the heat exchanging system and may have a boiling point below 0 degrees Celsius.

The automatic milking system comprises a milk cooling apparatus, comprising one or more valves, which are adapted to control the flow of the cooling water, and hence are able to recycle and utilize the water/cooling water in a very efficient way. The advantage of the milk cooling apparatus comprising one or more valves is, that an absolute minimum of tab water is consumed in the system, which is very beneficial from both an environmental and economical perspective. By controlling the directional flow of the cooling water, based on the cooling water temperature at various key checkpoints in the milk cooling apparatus, the milk cooling system of the present invention is able to determine at any given time, if it is thermodynamically advantageous to recycle the cooling water to the first and/or second heat exchangers for another cycle of usage for milk cooling, or weather it is thermodynamically more advantageous to utilize the cooling water for other purposes, such as usage for drinking water. Usage of the water from the heat accumulating structure, comprising the condenser system and water tank for teat cleaning and/or cleaning of the milking robot assembly of the present invention, is described elsewhere herein.

Hence, the milk cooling apparatus comprises one or more valves, wherein the valves are adapted to control the directional flow of the cooling water, based on the cooling water temperature at key checkpoints in the milk cooling apparatus. It is to be understood, that a key checkpoint within the meaning of the present invention, is a point anywhere in the milk cooling system, where a temperature is able to be measured.

In one embodiment of the present invention, the valves are adapted to control the directional flow of the cooling water, based on the temperature at a single key checkpoint in the milk cooling system.

In another embodiment of the present invention, the valves are adapted to control the directional flow of the cooling water, based on the temperature at two or more key checkpoints in the milk cooling system, such as three, four, five, six, seven, eight, nine, ten, fifteen, twenty, thirty, forty, fifty, sixty, seventy, eighty, ninety, hundred or more key checkpoints in the milk cooling system.

In yet another embodiment of the present invention, the valves are adapted to control the directional flow of the cooling water, based on the temperature difference between two or more key checkpoints in the milking cooling system, such as the temperature differences between three, four, five, six, seven, eight, nine, ten, fifteen, twenty, thirty, forty, fifty, sixty, seventy, eighty, ninety, hundred or more key checkpoints in the milk cooling system.

In a preferred embodiment of the present invention, the valves are adapted to control the directional flow of the cooling water, based on the temperature difference between two key checkpoints in the milking cooling system.

It is within the scope of the present invention, that the valves may be adapted to control the directional flow of the cooling water, independently or dependently of each other. Hence, one or more valves in the milk cooling system may be operating independently, while at the same time, one or more other valves may be adapted to operate dependently of each other. In certain embodiments of the present invention, the valves may be adapted to control the directional flow of the cooling water, based on the condition of one or more other valves within the milk cooling system.

However, in a preferred embodiment of the present invention, the valves are adapted to operate independently of each other.

In certain embodiments of the present invention, the valves are thermostatic valves.

The milk cooling system of the present invention is adapted to cool milk from one cow at the time, i.e. in batches of 5-15 litres of milk at the time, such as 8-13 litres, preferably approximately 10 litres of milk, such as 9.6 litres of milk. The milk will arrive in the cooling system from the milking robot every 5-10 minutes, such as every 6-8 minutes. When the milk has arrived in the cooling system of the present invention, the milk present for cooling is stationary, which allows for very rapid and efficient cooling of the milk. While cooling the batch of milk from the first cow in the cooling system, the second cow in line is being milked by the milking robot of the present invention. When the milk from the first cow is cooled, this cold milk is then transferred to the milk storage system. This allows for the cooling of the milk from said second cow, in the cooling system of the present invention, while at the same time the third cow in line is being milked by the milking robot, and so on and so forth.

The automatic milking system comprises a teat cleaning system which is adapted to clean the teats of the animal so as to reduce or even eliminate the risk of transfer for germs from the teats to the milk. As cleaning with cold water is not as effective as cleaning with hotter water e.g. being at body temperature or substantially at body temperature, the automatic milking system may comprise a means for ensuring that the water used for cleaning has a temperature in the range 28-40 degrees Celsius. It will also be appreciated that too cold or too hot water will be unpleasant for the animal, thus a temperature in the specified range may be desirable.

As the heat of the milk is gradually transferred to the heat accumulating structure, it may advantageously be utilized in the teat cleaning system. Thus in one embodiment, the water contained in the water tank is fluidly connected to the milking robot which is adapted to clean the teats of the cows with this water.

As the heat of the milk is gradually transferred to the heat accumulating structure, it may advantageously be utilized in the milk robot assembly cleaning system. Thus in one embodiment, the water contained in the water tank is fluidly connected to the milking robot assembly, whereby the water may be utilized to clean said milk robot assembly. In the milking robot, the water is heated to a temperature of around 90 degrees Celsius, providing optimal cleaning conditions for cleaning of the milk robot assembly.

The automatic milking system may comprise one or more heat accumulating media. In one embodiment, one or more - such as each - of the milking robot assemblies comprises a heat accumulating medium. Moreover, the heat accumulating medium may be provided in the vicinity of the milking robot. As an example, the heat accumulating medium may form an integral part of the milking robot, e.g. by being provided in the same casing as the milking robot and possibly the milk cooling apparatus.

Furthermore, the milking robot may accommodate the first and/or the second heat exchangers. As an example the first and/or second heat exchangers may be provided in the same casing as the milking robot.

In a second aspect, the present invention relates to a milk cooling apparatus for use in the automatic milking system according to the first aspect of the invention.

In a third aspect, the present invention relates to a milking robot assembly comprising the automatic milking system according to the first aspect of the invention.

### BRIEF DESCRIPTION OF THE FIGURES

The invention will now be described with reference to the figures in which:
Fig. 1 discloses a schematic diagram of an embodiment of the automatic milking system according to the invention.
Fig. 2 discloses another embodiment of the automatic milking system, in particular showing the valves and key checkpoints of the milk cooling apparatus, according to the invention.

**Table 1: Figure feature list**

| **No.** | **Feature** |
|---|---|
| 100 | Automatic milk system |
| 102 | Milking robot assembly |
| 104 | Milk cooling apparatus |
| 106 | First heat exchanger |
| 108 | Water supply |
| 110 | Second heat exchanger |
| 112 | Evaporator |
| 114 | Heat accumulating structure |
| 116 | Water tank |
| 118 | Condenser |
| 120 | First conduit |
| 122 | Second conduit |
| 124 | Outgoing drinking water supply line |
| 126 | Expansion valve |
| 128 | Compressor |
| 130 | Milk supply line |
| 132 | Outgoing milk supply line |
| 134 | Teat cleaning supply line |
| 136 | Pump 1 |
| 138 | Pump 2 |
| 141 | Key checkpoint 1 (T1) |
| 142 | Valve 1 (V1) |
| 143 | Key checkpoint 2 (T2) |
| 144 | Valve 2 (V2) |
| 145 | Key checkpoint 3 (T3) |
| 146 | Valve 3 (V3) |
| 147 | Key checkpoint 4 (T4) |
| 148 | Valve 4 (V4) |

### DETAILED DESCRIPTINO OF THE FIGURES

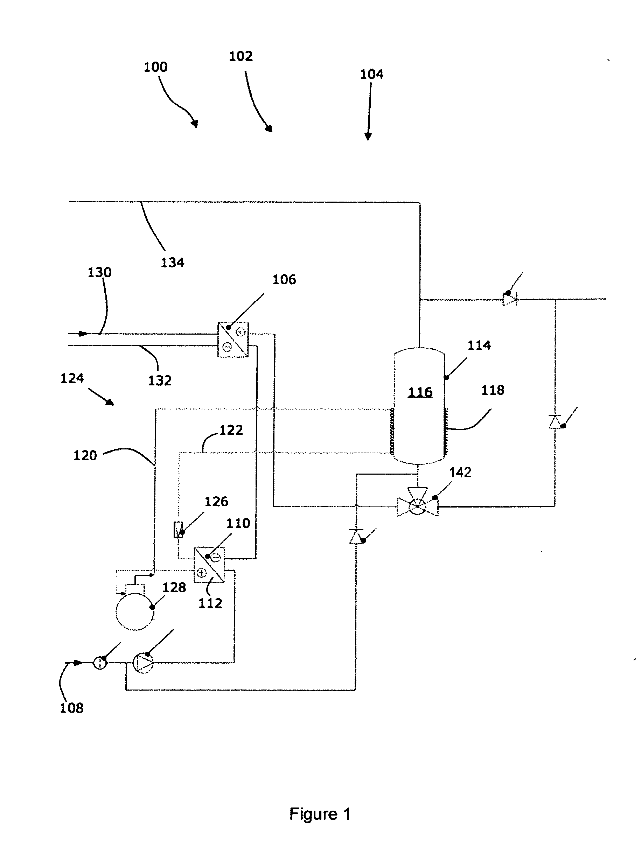

Fig. 1 discloses an embodiment of the automatic milking system 100 comprising one milking robot assembly 102 having a milking robot (not shown) and a milk cooling apparatus 104. The milk cooling apparatus 104 comprises a first heat exchanger 106 and a second heat exchanger 110. The first and second heat exchanger are arranged such that water initially flowing in the water supply 108 flows into the second heat exchanger in which it is cooled to a temperature close to but above the freezing point of the water flowing in the water supply 108. Once the water has been cooled down to the desired temperature, the water flows into the first heat exchanger 106. In the first heat exchanger, the temperature of the water is elevated as the thermal energy of the milk in the milk supply line 130 is transferred from the milk to the water. The effect is that the milk is cooled down and subsequently, it is pumped to a milk tank (not shown) via an outgoing milk supply line 132. Subsequently, at least a part of the water flows into the water tank 116 in which the water is stored. Inside the water tank 116, the water in heated by means of the condenser 118, and at least a part of this heated water used to clean the teats of the animals prior to the milking action. The teat cleaning system is connected to the tank 116 via the teat cleaning supply pipe 134.

The automatic milking system 100 comprises a heat exchanging system comprising the condenser 118 (which as mentioned above is provided in the water tank 116), a evaporator 112 which forms part of the second heat exchanger 110, and a first and second conduit (120,122). The outlet of second heat exchanger 110 is fluidly connected to the inlet of the water tank 116 via the compressor 128. Similarly, the outlet of the water tank 116 is fluidly connected to the inlet of the second heat exchanger 110 via the expansion valve 126.

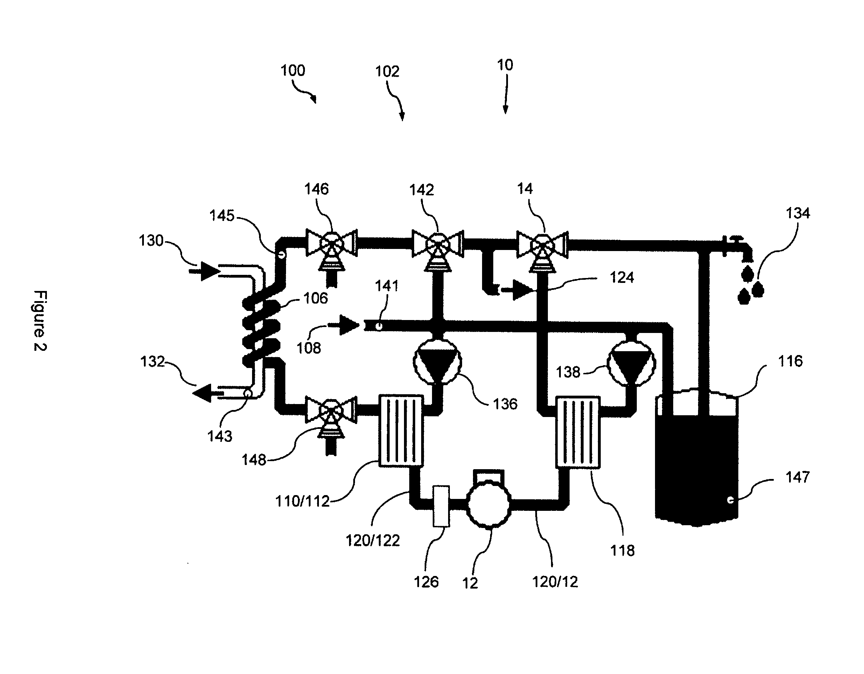

Fig. 2 discloses another embodiment of the automatic milking system 100 comprising one milking robot assembly 102 having a milking robot (not shown) and a milk cooling apparatus 104. The milk cooling apparatus 104 comprises one or more valves (142, 144, 146 and 148), as well as one or more key checkpoints (141, 143, 145 and 147) where the temperature of the cooling water is measured. Based on the cooling water temperature at these key checkpoints, the valves will control the directional flow of the cooling water. The temperature of the cooling water at key checkpoint 141 (T1) is the temperature of the tab water flowing into the milk cooling system from the water supply 108. The temperature of the cooling water at key checkpoint 143 (T2) corresponds to the temperature, to which the milk has been cooled. Hence, the temperature at key checkpoint 143 (T2) equals the temperature of the outgoing milk in the outgoing milk supply line 132. The temperature at key checkpoint 145 (T3) is the cooling water temperature immediately after the cooling water has been used to cool the milk. Hence, the temperature difference at key checkpoint 145 (T3) and at key checkpoint 143 (T2), is a measure of the thermal energy transferred from the milk to the cooling water.

The water temperature at key checkpoint 147 (T4) is the temperature of the water transferred to the water tank 116 from the condenser system comprising the condenser 118, the second pump 138 and the valve 144 (V2). Valve 142 (V1) will operate based on the cooling water temperature difference at key checkpoints 141 (T1) and 145 (T3). When the temperature at key checkpoint 141 (T1) is higher than the temperature at key checkpoint 145 (T3), valve 142 (V1) will direct the cooling water to the pump 136 for another cycle of usage for milk cooling. When the temperature at key checkpoint 141 (T1) is lower than the temperature at key checkpoint 145 (T3), valve 142 (V1) will direct the cooling water to the outgoing drinking water supply line 124, for usage as drinking water for the animals.

When this difference is relatively small, it is thermodynamically advantageous to recycle the cooling water for another cycle of usage for milk cooling. When the difference between T1 and T3 becomes relatively large, it is thermodynamically advantageous to direct the used cooling water to the outgoing drinking water supply line 124, for usage as drinking water for the animals.

Dependant on the local weather conditions, the temperature of the tap water from the water supply 108 at key checkpoint 141 (T1) may be in the range of 7-15 degrees Celsius. Dependant on the number of usage cycles of the cooling water, the temperature of the cooling water at key checkpoint 145 (T3) will decrease from approximately 20 degrees Celsius in the first round of usage, to about 3 degrees Celsius when the milk in the outgoing supply line 132 is completely cooled. This is possible due the extra cooling of the tap water from the water supply line, in the milk cooling system of the present invention.

If the cooling water temperature at key checkpoint 145 (T3) is higher than the temperature at key checkpoint 141 (T1), the valve 142 (V1) will direct the cooling water to the outgoing drinking water supply line 124. If the cooling water temperature at key checkpoint 145 (T3) is lower than the temperature at key checkpoint 141 (T1), the valve 142 (V1) will direct the cooling water to the pump 136 for another cycle of usage for milk cooling.

Valve 144 (V2) will operate on basis of a predetermined setpoint, said setpoint being in the range of 28-42 degrees Celsius, typically 37 degrees Celsius. If the water is below this setpoint temperature, the valve 144 (V2) will be set in a position to ensure recycling of the water in the heat accumulating structure, comprising the condenser system and water tank 116. If the water is above this setpoint temperature, the valve 144 (V2) will instead be set in a position to direct the water to the outgoing drinking water supply line (124), for usage as drinking water for the animals.

Valves 146 (V3) and 148 (V4) are adapted to operate when receiving an appropriate signal from the milking robot assembly102. When receiving such signal, valves 146 (V3) and 148 (V4) will control the directional flow of the cooling water, such that the cooling water are removed from the milk cooling system 100, and the milk cooling apparatus 104 is drained. Drainage of the cooling system is necessary for cleaning the milking robot assembly. Hence, the valves 146 (V3) and 148 (V4) may operate when receiving an appropriate signal from the milking robot assembly 102, said signal being released by the milking robot assembly 102, so as to ensure an appropriate high temperature of the water used for cleaning of the said milking robot assembly.

Only certain embodiments of the present invention are described in detail herein. However, the person skilled in the art will be able to envisage other embodiments, which may be carried out within the scope of the claims.

## Claims

1. An automatic milking system (100) comprising:
- at least one milking robot assembly (102), comprising a milking robot adapted to automatically milk a cow;
- wherein at least one of the milking robot assemblies (102) comprises a milk cooling apparatus (104), said milk cooling apparatus comprising:
- a first heat exchanger (106) for cooling milk which is milked with the milking robot of the respective milking robot assembly, the first heat exchanger (106) being fluidly connected to a water supply (108), by means of which the freshly milked milk is cooled with the first heat exchanger (106), the first heat exchanger (106) is located in the vicinity of the respective milking robot, and
- a second heat exchanger (110) which is fluidly connected to the water supply (108) and is provided upstream in the water supply (108) relative to the first heat exchanger (106), the second heat exchanger (110) being adapted to cool water from the water supply (108) to a predetermined temperature, and wherein the second heat exchanger (110) is provided in the vicinity of the respective milking robot (102)
- a heat accumulating structure (114) comprising a water tank (116), a compressor (128), a condenser (118) adapted to accommodate the cooling medium which has a boiling point below 0 degrees Celsius, the condenser being fluidly connected to the evaporator via a first and a second conduit (120,122)
- a heat exchanging system (124) comprising an evaporator (112) and said condenser (118), and first and second conduits (120,122) which fluidly connect the evaporator (112) and the condenser (118) with one another, the heat exchange system (124) comprising an expansion valve (126) and a compressor (128) which are arranged such in the heat exchanging system that when the compressor (128) is operated, the evaporator (112) cools the water flowing through the second heat exchanger (110) and the condenser (118) elevates the temperature of the heat cumulating structure (114)
- means for making at least part of the water exiting the first heat exchanger flow into said water tank (116)
- one or more valves, wherein the valves are adapted to control the directional flow of the cooling water, based on the cooling water temperature at key checkpoints in the milk cooling apparatus (104), thereby enabling the milk cooling system to determine at any given time, if it is thermodynamically advantageous to recycle the cooling water to the first and/or second heat exchangers for another cycle of usage for milk cooling, or whether it is thermodynamically more advantageous to utilize the cooling water for other purposes,
- said key checkpoints each being a point anywhere in the milk cooling system, where a temperature may be measured.

2. The automatic milking system according to claim 1, wherein the second heat exchanger (110) comprises the evaporator (112) for cooling the water of the water supply (108), the evaporator (112) being adapted to accommodate a cooling medium which has a boiling point below 0 degrees Celsius.

3. The automatic milking system according to claim 1 or 2, wherein said one or more valves are thermostatic valves.

4. The automatic milking system according to claims 1-3, wherein the valves are adapted to operate independently of each other.

5. The automatic milking system according to claim 4, wherein the valves are adapted to control the directional flow of the cooling water, based on the water temperature difference at two predetermined key checkpoints in the milk cooling apparatus (104).

6. The automatic milking system according to claims 1-5, wherein the water contained in the water tank (116) is fluidly connected to the milking robot which is adapted to clean the teats of the cows with this water.

7. The automatic milking system according to claim 1-5, wherein the water contained in the water tank (116) is fluidly connected to the milking robot assembly, wherein the water is used to clean said milking robot assembly.

8. The automatic milking system according to any of claims 1-8, wherein the heat accumulating structure (114) is provided in the vicinity of the milking robot.

9. The automatic milking system according to any of the preceding claims, wherein the milking robot accommodates the first and/or the second heat exchangers (106,110).

10. The automatic milking system according to any of the preceding claims, wherein any milking robot assembly (102) of the automatic milking system comprises one milking robot and one milk cooling apparatus (104).

11. A milk cooling apparatus (104) for use in the automatic milking system according to any of claims 1-10.

12. A milking robot assembly comprising the automatic milking system according to any of the claims 1 - 10.

## Patentansprüche

1. Ein automatisches Melksystern (100) aufweisend:
- zumindest eine Melkroboteranordnung (102), aufweisend einen Melkroboter, der dafür angepasst ist, um eine Kuh automatisch zu melken;
- wobei zumindest eine der Melkroboteranordnungen (102) eine Milchkühlvorrichtung (104) aufweist, die besagte Milchkühlvorrichtung aufweisend:
- einen ersten Wärmetauscher (106) zum Kühlen von Milch, die mit dem Melkroboter der entsprechenden Melkroboteranordnung gemolken wird, der erste Wärmetauscher (106) steht in Fluidverbindung mit einer Wasserversorgung (108), mittels der die frisch gemolkene Milch mit dem ersten Wärmetauscher (106) gekühlt wird, der erste Wärmetauscher (106) befindet sich in der Nähe des entsprechenden Melkroboters und
- einen zweiten Wärmetauscher (110), der in Fluidverbindung mit der Wasserversorgung (108) steht und stromaufwärts in der Wasserversorgung (108) relativ zum ersten Wärmetauscher (106) bereitgestellt ist, der zweite Wärmetauscher (110) ist angepasst, um Wasser von der Wasserversorgung (108) auf eine vorherbestimmte Temperatur zu kühlen und wobei der zweite Wärmetauscher (110) in der Nähe des entsprechenden Melkroboters (102) bereitgestellt ist
- eine wärmespeichernde Struktur (114) aufweisend einen Wassertank (116), einen Kompressor (128), einen Kondensator (118) angepasst, um das Kühlmedium aufzunehmen, das einen Siedepunkt unter 0 Grad Celsius hat, der Kondensator steht über eine erste und eine zweite Leitung (120, 122) in Fluidverbindung mit dem Verdampfer
- ein Wärmeaustauschsystem (124) aufweisend einen Verdampfer (112) und den besagten Kondensator (118) und erste und zweite Leitungen (120, 122), durch die der Verdampfer (112) und der Kondensator (118) miteinander in Fluidverbindung stehen, das Wärmeaustauschsystem (124) aufweisend ein Expansionsventil (126) und einen Kompressor (128), welche so im Wärmeaustauschsystem angeordnet sind, dass, wenn der Kompressor (128) betrieben wird, der Verdampfer (112) das Wasser kühlt, das durch den zweiten Wärmetauscher (110) fließt, und der Kondensator (118) die Temperatur der wärmeanhäufenden Struktur (114) erhöht
- Mittel zum Erzielen, dass zumindest ein Teil des Wassers, das aus dem ersten Wärmetauscher hinaustritt, in den besagten Wassertank (116) hineinfließt
- ein oder mehrere Ventile, wobei die Ventile angepasst sind, um den gerichteten Fluss des Kühlwassers zu steuern, basierend auf der Kühlwassertemperatur an Schlüsselprüfpunkten in der Milchkühlvorrichtung (104), damit ermöglichend, dass das Milchkühlsystem zu jeder gegebenen Zeit bestimmt, ob es thermodynamisch vorteilhaft ist, das Kühlwasser zu den ersten und/oder zweiten Wärmetauschern für einen weiteren Verwendungszyklus für Milchkühlung zurückzuführen oder ob es thermodynamisch vorteilhafter ist, das Kühlwasser für andere Zwecke zu nutzen,
- die besagten Schlüsselprüfpunkte sind jeweils ein Punkt irgendwo in dem Milchkühlsystem, wo eine Temperatur gemessen werden kann.

2. Das automatische Melksystem gemäß Anspruch 1, wobei der zweite Wärmetauscher (110) den Verdampfer (112) zum Kühlen des Wassers der Wasserversorgung (108) aufweist, der Verdampfer (112) ist angepasst, um ein Kühlmedium aufzunehmen, das einen Siedepunkt unter 0 Grad Celsius hat.

3. Das automatische Melksystem gemäß Anspruch 1 oder 2, wobei das besagte eine Ventil oder die besagten mehreren Ventile Thermostatventile sind.

4. Das automatische Melksystem gemäß der Ansprüche 1 - 3, wobei die Ventile angepasst sind, unabhängig voneinander zu operieren

5. Das automatische Melksystem gemäß Anspruch 4, wobei die Ventile angepasst sind, um den gerichteten Fluss des Kühlwassers zu steuern, basierend auf der Wassertemperaturdifferenz an zwei vorherbestimmten Prüfpunkten in der Milchkühlvorrichtung (104).

6. Das automatische Melksystem gemäß der Ansprüche 1 - 5, wobei das Wasser, das im Wassertank (116) beinhaltet ist, in Fluidverbindung mit dem Melkroboter steht, der angepasst ist, um die Zitzen der Kühe mit diesem Wasser zu reinigen.

7. Das automatische Melksystem gemäß Anspruch 1 - 5, wobei das Wasser, das im Wassertank (116) beinhaltet ist, in Fluidverbindung mit der Melkroboteranordnung steht, wobei das Wasser verwendet wird, um die besagte Melkroboteranordnung zu reinigen.

8. Das automatische Melksystem gemäß einem der Ansprüche 1 - 8, wobei die warmespeichernde Struktur (114) in der Nähe des Melkroboters bereitgestellt wird.

9. Das automatische Melksystem gemäß einem der vorhergehenden Ansprüche, wobei der Melkroboter die ersten und/oder die zweiten Wärmetauscher (106, 110) aufnimmt.

10. Das automatische Melksystem gemäß einem der vorhergehenden Ansprüche, wobei jede Melkroboteranordnung (102) des automatischen Melksystems einen Melkroboter und eine Milchkühlvorrichtung (104) aufweist.

11. Eine Milchkühlvorrichtung (104) zur Verwendung bei dem automatischen Melksystem gemäß einem der Ansprüche 1 - 10.

12. Eine Melkroboteranordnung aufweisend das automatische Melksystem gemäß einem der Ansprüche 1-10.

## Revendications

1. Système de traite automatique (100), comprenant :
- au moins un ensemble de robot de traite (102), comprenant un robot de traite qui est à même de traire automatiquement une vache ;
- dans lequel au moins l'un des ensembles de robots de traite (102) comprend un appareil de refroidissement de lait (104), ledit appareil de refroidissement de lait comprenant :
- un premier échangeur de chaleur (106) pour refroidir le lait qui est trait avec le robot de traite de l'ensemble de robot de traite respectif, le premier échangeur de chaleur (106) étant en communication fluidique avec une alimentation en eau (108), au moyen de laquelle le lait fraîchement trait est refroidi avec le premier échangeur de chaleur (106), le premier échangeur de chaleur (106) étant situé au voisinage du robot de traite respectif, et
- un second échangeur de chaleur (110) qui est en communication fluidique avec l'alimentation en eau (108) et est situé en amont dans l'alimentation en eau (108) par rapport au premier échangeur de chaleur (106), le second échangeur de chaleur (110) étant à même de refroidir l'eau provenant de l'alimentation en eau (108) à une température prédéterminée, et dans lequel le second échangeur de chaleur (110) est situé au voisinage du robot de traite respectif (102),
- une structure accumulatrice de chaleur (114) comprenant un réservoir d'eau (116), un compresseur (128), un condenseur (118) qui est à même de recevoir l'agent de refroidissement qui a un point d'ébullition en dessous de 0 degré Celsius, le condenseur étant en communication fluidique avec l'évaporateur via un premier et un second conduit (120, 122),
- un système échangeur de chaleur (124) comprenant un évaporateur (112) et ledit condenseur (118), et le premier et le second conduit (120, 122), qui raccordent en communication fluidique l'évaporateur (112) et le condenseur (118) l'un avec l'autre, le système échangeur de chaleur (124) comprenant une vanne d'expansion (126) et un compresseur (128) qui sont aménagés de sorte que, dans le système échangeur de chaleur, lorsque le compresseur (128) est actionné, l'évaporateur (112) refroidisse l'eau s'écoulant à travers lie second échangeur de chaleur (110) et que le condenseur (118) élève la température de la structure accumulatrice de chaleur (114),
- des moyens pour faire en sorte qu'au moins une partie de l'eau sortant du premier échangeur de chaleur s'écoule dans ledit réservoir d'eau (116),
- une ou plusieurs vannes, dans lequel les vannes sont à même de commander l'écoulement directionnel de l'eau de refroidissement sur la base de la température de l'eau de refroidissement en des points de contrôle clés de l'appareil de refroidissement de lait (104), ce qui permet au système de refroidissement du lait de déterminer, à tout moment donné, s'il est avantageux au plan thermodynamique de recycler l'eau de refroidissement vers le premier et/ou le second échangeur de chaleur pour un autre cycle d'utilisation pour le refroidissement du lait ou s'il est plus avantageux au plan thermodynamique d'utiliser l'eau de refroidissement à d'autres fins,
- lesdits points de contrôle clés étant chacun un point quelque part dans le système de refroidissement du lait où une température peut être mesurée.

2. Système de traite automatique selon la revendication 1, dans lequel le second échangeur de chaleur (110) comprend l'évaporateur (112) pour refroidir l'eau de l'alimentation en eau (108), l'évaporateur (112) étant à même de recevoir un agent de refroidissement qui a un point d'ébullition en dessous de 0 degré Celsius.

3. Système de traite automatique selon la revendication 1 ou la revendication 2, dans lequel lesdites une ou plusieurs vannes sont des vannes thermostatiques.

4. Système de traite automatique selon les revendications 1 à 3, dans lequel les vannes sont à même de fonctionner indépendamment l'une de l'autre.

5. Système de traite automatique selon la revendication 4, dans lequel les vannes sont à même de commander l'écoulement directionnel de l'eau de refroidissement sur la base de la différence de température de l'eau en deux points de contrôle clés prédéterminés dans l'appareil de refroidissement du lait (104).

6. Système de traite automatique selon les revendications 1 à 5, dans lequel l'eau contenue dans le réservoir d'eau (116) est en communication fluidique avec le robot de traite, qui est à même de nettoyer les pis des vaches avec cette eau.

7. Système de traite automatique selon les revendications 1 à 5, dans lequel l'eau contenue dans le réservoir d'eau (116) est en communication fluidique avec l'ensemble de robot de traite, dans lequel l'eau est utilisée pour nettoyer ledit ensemble de robot de traite.

8. Système de traite automatique selon l'une quelconque des revendications 1 à 8, dans lequel la structure accumulatrice de chaleur (114) est située au voisinage du robot de traite.

9. Système de traite automatique selon l'une quelconque des revendications précédentes, dans lequel le robot de traite reçoit le premier et/ou le second échangeur de chaleur (106, 110).

10. Système de traite automatique selon l'une quelconque des revendications précédentes, dans lequel tout ensemble de robot de traite (102) du système de traite automatique comprend un robot de traite et un appareil de refroidissement du lait (104).

11. Appareil de refroidissement du lait (104) pour utilisation dans le système de traite automatique selon l'une quelconque des revendications 1 à 10.

12. Ensemble de robot de traite comprenant le système de traite automatique selon l'une quelconque des revendications 1 à 10.
